# EUROPEAN PATENT SPECIFICATION

(11) **EP 3 424 343 B1**
(45) Date of publication and mention of the grant of the patent: **18.05.2022**
(21) Application number: 17759975.0
(22) Date of filing: 28.02.2017
(51) Int. Cl.: A23L 3/365, A23L 3/36, F25D 23/12, F25D 31/00, H05B 6/50, H05B 6/62

(54) **FOOD DEFROSTING/REFRIGERATING STORAGE CHAMBER**
NAHRUNGSMITTELAUFTAU-/KÜHLLAGERKAMMER
DÉCONGÉLATION D'ALIMENTS/CHAMBRE DE STOCKAGE RÉFRIGÉRANT

(30) Priority: 04.03.2016 JP 2016042585
(43) Date of publication of application: 09.01.2019
(73) Proprietor: Recette9 Inc., Minato-ku Tokyo 108-0075 (JP)
(72) Inventor: KOYASU Masayoshi, Matsue-shi Shimane 699-0101 (JP)
(74) Representative: Vossius & Partner Patentanwälte Rechtsanwälte mbB
(86) International application number: PCT/JP2017/007711
(87) International publication number: WO 2017/150509

(56) References cited:
- JP-A- H07 155 154
- JP-A- 2003 235 119
- JP-A- 2007 111 011
- JP-A- 2011 182 697
- JP-A- 2011 182 700
- JP-A- 2012 042 173
- JP-A- 2012 207 900
- JP-A- 2014 007 918
- JP-B2- 5 288 286
- SAISHIN ZUKAI DENKI et al.: "S hai-den to okunai haisen okunai haisen = [Part 8: Electricity transmission and distribution and indoor wiring]", Sohaiden to Okunai Haisen [, 20 June 2015 (2015-06-20), pages 230-233, XP009513720,

## Description

### Technical Field:

This invention relates to a food defrosting/ refrigerating storage chamber for defrosting or refrigerating and storing food in a space in which an electric field is formed by means of application of an AC voltage.

### Background Arts:

A food defrosting/refrigerating and storage chamber for defrosting or refrigerating and storing food in a space in which an electric field is formed by means of application of an AC voltage is conventionally well known. JP H07 155154 A discloses a refrigerator having an electric field treating chamber set in a refrigerating chamber, a high-voltage electric source for generating a high voltage, a high-voltage electrode which is laid on a ceiling of the electric field treating chamber and is connected to a high-voltage electrode of the high-voltage electric source, and a flat plate earth electrode which is installed on the bottom of the electric field treating chamber, is opposed to the high-voltage electrode and is connected to an earth electrode of the high-voltage electric source. A control device for operating the high-voltage electric source for a given time is also provided. JP 5 288286 B2 discloses an apparatus for thawing/refrigerating food including a disposition member on which an object to be stored can be boarded in an electrically-insulated condition, an earth electrode which is electrically insulated from the disposition member, and a voltage-applied electrode electrically insulated from the object to be stored across the object. A high-frequency alternating voltage set to 500-1,500 V is applied between both of the electrodes to form an electric field.

### Summary of the Invention:

### Problems to be solved by the Invention

The food defrosting/refrigerating storage chambers disclosed in the above-identified prior art documents have a plurality of voltage application devices and are thus capable of collectively defrosting or refrigerating and storing a large quantity of food, whereas such storage chambers bring about the complex management of wiring of the connection circuit when excessively increasing the number of voltage application devices for the purpose of increasing a quantity of food to be treated, and has also difficulty in handling in the event of malfunctions.

An object of the present invention is to provide a food defrosting/refrigerating storage chamber that is for defrosting or refrigerating and storing food in a space in which an electric field is formed by means of application of an AC voltage, that prevents the management of wiring of a connection circuit from coming into being complex even in the case where the number of voltage application devices for applying the AC voltage to the food is increased, and that is also easy to carry out handling in the event of malfunctions.

### Means for solving the Problems:

The above-identified object is achieved by a food defrosting/refrigerating storage chamber having the features defined by claim 1. Further configurations are defined by the features in the dependent claims.

According to a preferred embodiment of the invention the first distributing device or the second distributing device is constituted so as to have a power distribution configuration that can be changed by changing a wiring structure.

According to a preferred embodiment of the invention the power output means is constituted so as to be capable of outputting power to a plurality of first distributing devices.

According to a preferred embodiment of the invention the power supplying device includes a start operation means for starting the supply of power via the control section, a stop operation means for stopping the supply of power via the control section and a notification means, and that the control section gives notification by the notification means to notify a power supply state in which power is supplied based on an operation by the start operation means, in the case of the presence of the power supply state, while giving notification by the notification means to notify a power supply stop state in which the supply of power is stopped based on an operation by the stop operation means, in the case of the presence of the power supply stop state.

According to a preferred embodiment of the invention the power supplying device includes an opening/closing detection means for detecting whether an entrance to the storage chamber interior is opened or closed, and that the control section stops the supply of power in the case where the opening/closing detection means detects that the entrance is in an opened state at the time of the presence of the above power supply state, and gives notification by the notification means to notify a power supply emergency stop state in such a manner as to be distinguished from the power supply stop state.

According to a preferred embodiment of the invention the power supplying device includes a voice output means included as one of the notification means and a switching operation means for switching whether the notification by the voice output means is given or not.

According to a preferred embodiment of the invention the power supplying device includes a dedicated notification means used only for notifying the power supply state.

### Effects of the Invention:

With the above constitution, a double-layered wiring structure is obtained by the first and the second distributing devices both included in the connection circuit to enable the wiring to be managed for each group of the voltage applying means and/or for each layer, so that the management of wiring of the connection circuit is prevented from coming into being complex even in the case where the number of voltage application devices for applying the AC voltage to the food is increased, and besides, handling in the event of malfunctions becomes facilitated.

### Brief Description of the Drawings:

[FIG. 1] FIG. 1 is an illustration for explaining the constitution of a food storage chamber, to which the present invention is applied.
[FIG. 2] FIG. 2 is an illustration for explaining the constitution of a voltage application device shown in FIG. 1.
[FIG. 3] FIG. 3 is a circuit diagram showing the constitution of a feeding device shown in FIG. 2.
[FIG. 4] FIG. 4 is a block diagram showing the constitution of a voltage supplying device.
[FIG. 5] FIGS. 5(A) and 5(B) are a front view and a side view respectively showing the constitution of a control unit.
[FIG. 6] FIG. 6 is an illustration for explaining the constitution of a touch panel type liquid crystal display.
[FIG. 7] FIG. 7 is a circuit diagram of a connection circuit.
[FIG. 8] FIG. 8 is a flowchart showing the processing procedure of a control section.

### Mode for Embodying the Invention:

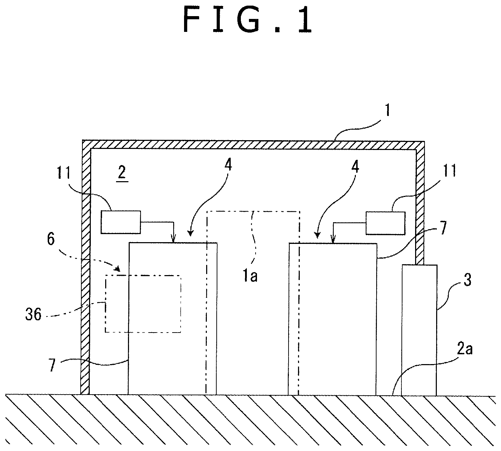

FIG. 1 is an illustration for explaining the constitution of a food storage chamber, to which the present invention is applied. The illustrated food storage chamber (a refrigerating chamber) includes a storage chamber 1, a cooling device 3 for cooling an inside (a storage chamber interior 2) of the storage chamber 1, a voltage application device 4 for generating an electric field in a prescribed space in the storage chamber interior 2 by means of application of a voltage and a power supplying device 6 for supplying power to the voltage application device 4.

The storage chamber 1 has an entrance 1a formed to be open, and the entrance 1a is opened/closed by a non-illustrated opening/closing door so that carrying-in/out works are performed through the entrance 1a.

The cooling device 3 cools the storage chamber interior 2 by using a conventionally well-known art in which vaporization heat is utilized, specifically, by utilizing the vaporization heat generated in circulation of a refrigerant through a compressor → a condenser → an expansion valve → an evaporator → ··· in this order.

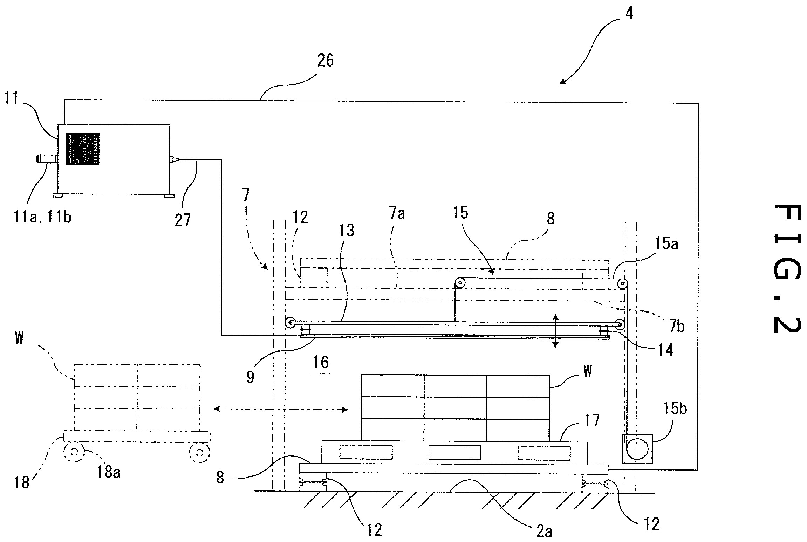

FIG. 2 is an illustration for explaining the constitution of a voltage application device shown in FIG. 1. The voltage application device 4 includes a multiple vertically-staged storage shelf 7 arranged in the storage chamber interior 2 to store food (an object to be stored) W, a pair of electrodes 8, 9 provided on a storage shelf 7-side and a feeding device (a voltage applying means) 11 for applying a voltage between the pair of electrodes 8, 9.

A ground electrode plate (an electrode, a ground electrode) 8 is installed on one (a floor 7a-side as for the present embodiment) of upper and lower sides of each stage of the storage shelf 7, and an application electrode (an electrode, an application electrode) 9 is installed on the other side (a ceiling 7b-side as for the present embodiment).

The ground electrode plate 8 is positioned and mounted, through insulators 12, on a floor surface 2a of the storage chamber interior 2 or on a floor 7a in each stage of the storage shelf 7, resulting in that such ground electrode plate 8 is electrically insulated from the storage shelf 7 and the floor surface 2a. The application electrode 9 is attached, through insulators 14, to and supported by a lower surface side of a horizontal movable plate 13 that is in a state of being hung in a vertically movable manner from and supported by each stage of the storage shelf 7, resulting in that such application electrode 9 is electrically insulated from the storage shelf 7 and the movable plate 13.

The food W is to be disposed between the pair of electrodes 8, 9. In other words, a disposition space (a space) 16 in which the food W is to be disposed is formed between the electrodes 8, 9. Then, a pallet 17 and/or a carriage 18 and the like are stored in the disposition space 16, and the food W is mounted on the pallet 17 and/or the carriage 18.

The pallet 17 is wholly made of an insulating material so as to electrically insulate the food W mounted on the pallet 17 and the storage shelf 7 from each other, and is lifted up/down and/or carried by a forklift. The carriage 18 at least has insulating material-made wheels 18a so as electrically insulate the food W mounted on the carriage 18 and the storage shelf 7 from each other as well, and the food W mounted on the carriage 18 is carried by manual operation and the like.

Besides, one (the application electrode 9 as for the present embodiment) of the electrodes 8, 9 is vertically moved by a lifting mechanism 15. The lifting mechanism 15 includes a winch 15b for hanging the movable plate 13 and the electrode 9 through a wire rope 15a, a chain or a string and the like, wherein the winch 15b carries out feeding-out and taking-up operations to vertically move the movable plate 13 and the electrode 9. Such vertical movement of the movable plate and the electrode changes a distance between the pair of electrodes 8, 9, and as a result, an electric field intensity in the vicinity of the food W in the event of application of a voltage is adjusted in accordance with a change of the distance. Namely, the lifting mechanism 15 forms an intensity changing means for changing an electric field intensity around the food W.

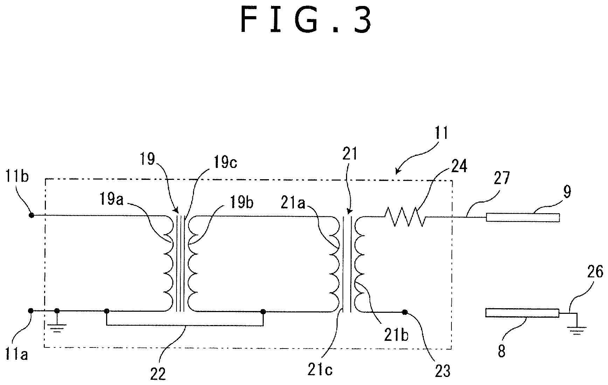

FIG. 3 is a circuit diagram showing the constitution of a feeding device shown in FIG. 2. The feeding device 11 includes a magnetic leakage transformer 19 for transforming an AC voltage inputted from a pair of input terminals 11a, 11b and a boosting transformer 21 for boosting the transformed AC voltage obtained by the magnetic leakage transformer 19.

The magnetic leakage transformer 19 includes a primary coil 19a, a secondary coil 19b and an adjusted iron core 19c. One end of the primary coil 19a is grounded, and this grounded terminal and one end of the secondary coil 19b are connected to each other via a short circuit 22, so that the thus connected one end of the secondary coil 19b is grounded as well.

The boosting transformer 21 includes a primary coil 21a, a secondary coil 21b and an iron core 21c. The opposite ends of the primary coil 21a of the boosting transformer 21 are respectively connected to the opposite ends of the secondary coil 19b of the magnetic leakage transformer 19 in an alternative manner. One end of the secondary coil 21b is insulated and sealed by an insulating and sealing part 23, while the other end thereof is electrically connected to the application electrode 9 via a resistor 24.

Electric connection of the feeding device 11 to the pair of electrodes 8, 9 will now be described in more detail, that is, the ground electrode 8 is connected to a ground side of the feeding device 11 via a ground-side connection line (a connection line) 26. An output-side end of the resistor 24 is connected to the application electrode 9 via an application-side connection line (a connection line) 27.

The feeding device 11 having the above constitution boosts a voltage inputted from the pair of input terminals 11a, 11b, and then outputs the resultant voltage to an application electrode 9-side. Specifically, a voltage of 100 V (an effective value) is boosted up to about 500 to 2500 V (more preferably, 500 to 1500 V). Also, a frequency may be set to be 50 or 60 Hz that is applicable for use in a domestic power source, or alternatively, not less than 100 Hz (preferably not less than 500 Hz, more preferably not less than 1000 Hz). As for the present embodiment, the frequency is set to be within the range of 100 to 1000 Hz. By the way, a voltage with its frequency changed by a non-illustrated converter may be also inputted to the primary coil 19a of the magnetic leakage transformer 19, in the case where such setting of the frequency takes place on the spot.

An alternating electric field (an electric field) is formed in the disposition space 16 by applying the AC voltage between the pair of electrodes 8, 9 with the feeding device 11. The alternating electric field is effective in enhancing an efficiency in cooling the food and/or keeping a food quality in defrosting.

Specifically, the alternating electric field provides an enhanced cooling efficiency. Accordingly, enlargement of ice crystals in the food in the middle of being frozen is efficiently suppressed, so that cellular tissues of the food come to be hardly destroyed, resulting in that freshness of the food is kept. In addition, the alternating electric field easily causes a super-cooling state. The super-cooling state is likely to be caused particularly under an atmosphere in which a high-frequency alternating electric field is formed, and as for the above embodiment, it is found that the super-cooling state is easily caused when the frequency in the range of 500 to 1000 Hz is set.

The super-cooling state enables the food to be defrosted even at temperatures below the freezing point, resulting in that the freshness of the food is kept. In addition, the super-cooling state facilitates preserving of the food without being frozen and/or defrosting of the food in the storage chamber interior 2 at temperatures below the freezing point (of about -5°C, for instance), so that generation of drip and the like resulting from the enlargement of ice crystals is efficiently prevented in defrosting.

By the way, it is considered that one of the reasons why such phenomenon occurs is the fact that a water molecular dipole is subjected to rotation or vibration to bring about fractionalization of a water molecule cluster, that is, a group of water molecules, under an alternating electric field atmosphere in which an electric field direction and/or intensity are periodically changed.

There are provided, in the storage chamber interior 2, a plurality of voltage application devices 4 each having the above constitution, wherein the above power supplying device 6 performs the supply of power to each of the plurality of voltage application devices 4. By the way, the feeding device 11 may be a feeding device installed for each storage shelf 7 or that installed for each stage of the storage shelf 7, or alternatively, a combination of such feeding devices.

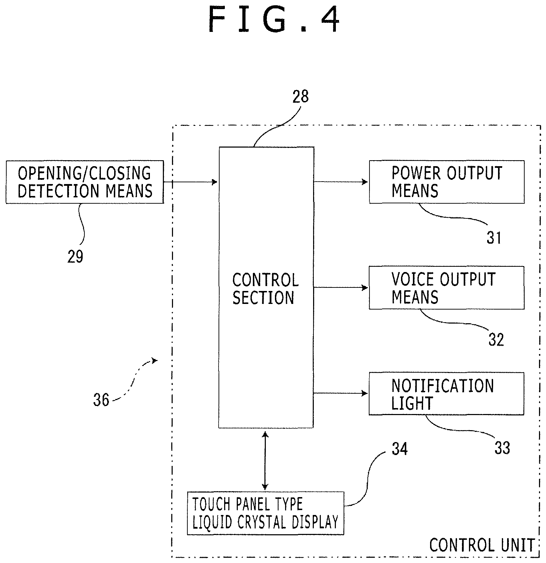

FIG. 4 is a block diagram showing the constitution of a power supplying device. The power supplying device 6 includes a control section 28 composed of components such as a RAM, a ROM and a microcomputer.

To an input side of the control section 28 is connected an opening/closing detection means 29 such as an opening/closing sensor for detecting whether the entrance to the storage chamber interior 2 is opened or closed. To an output side of the control section 28 are connected a power output means 31 such as an output terminal for outputting power supplied from a non-illustrated external power source, a voice output means 32 such as a speaker for outputting voice guidance and a notification light (a notification means) 33 constituted so as to be lighted on for the purpose of notifying that output of power is performed by the power output means 31 in the middle of the output of power by the power output means. Further, to the control section is connected a touch panel type liquid crystal display (a monitor, an operation means) 34 in an inputtable/outputtable manner. By the way, the notification light 31 forms a dedicated notification means used only for notifying the presence/absence of the power supply state.

The control section 28, the power output means 31, the voice output means 32, the notification light 33 and the touch panel type liquid crystal display 34 are unitized to form a control unit 36.

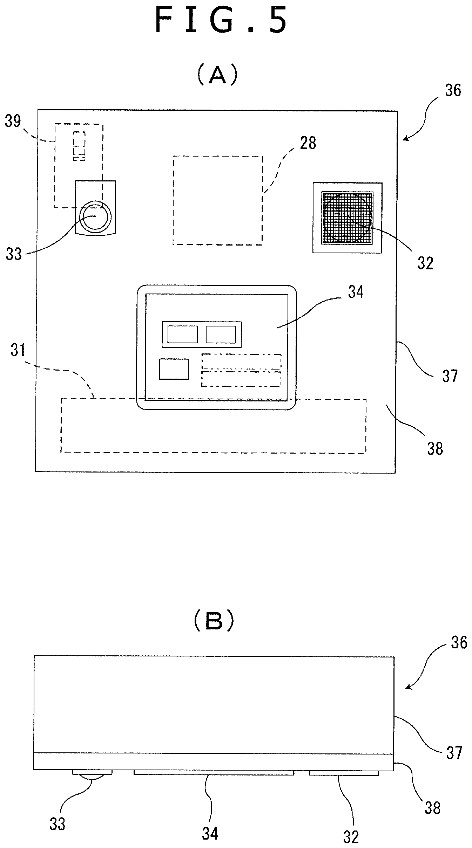

FIGS. 5(A) and 5(B) are a front view and a side view respectively showing the constitution of a control unit. The control unit 36 has an opening/closing panel 38 installed on a front surface side of a casing 37 in a freely openable/closable manner, and on an outer surface side of the opening/closing panel 38 are installed the voice output means 32, the notification light 33 and the liquid crystal display 34, wherein the interior of the casing 37 can be exposed by opening the opening/closing panel 38.

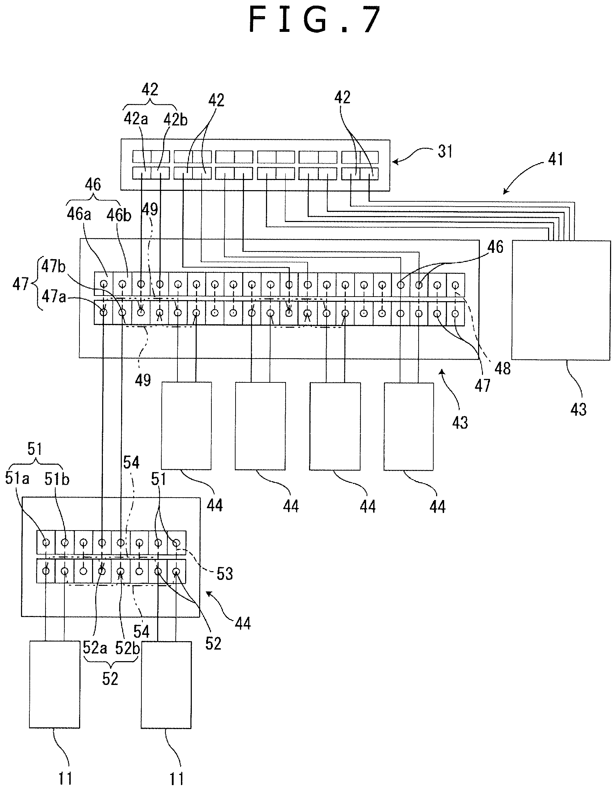

In addition to the control section 28 and the output terminal 31, a breaker 39 for turning on/off power is also arranged inside the casing 37. The power supplying device 6 is powered on/off by an ON/OFF operation of the breaker 39, thereby causing display on the liquid crystal display 34 to be turned ON/OFF. The output terminal 31 is connected to each feeding device 11 of the plurality of voltage application devices 4 via a connection circuit 41 (see FIG. 7) which will be described later.

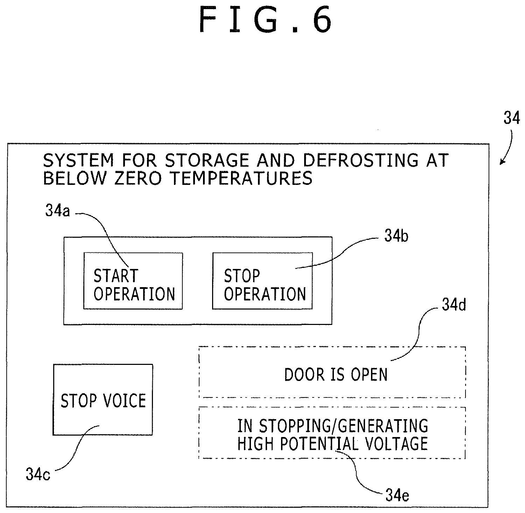

FIG. 6 is an illustration for explaining the constitution of a touch panel type liquid crystal display. The touch panel type liquid crystal display 34 when being in an ON state displays an operation start button (a start operation means) 34a, an operation stop button (a stop operation means) 34b, a voice button (a switching operation means) 34c, an opening/closing information display part 34d and an operating condition display part 34e.

An operation for starting the operation (electric field formation) is performed by touching the operation start button 34a, an operation for stopping the operation (the electric field formation) is performed by touching the operation stop button 34b, and an operation for switching whether the voice guidance is given or not is performed by touching the voice button 34c.

The opening/closing information display part 34d displays information in the form of character information indicating that the entrance 1a is open, when the entrance is in an opened state, whereas it provides no display when the entrance is in a closed state. The operating condition display part 34e displays information in the form of character information indicating whether the electric field formation by means of application of the voltage is performed or not.

FIG. 7 is a circuit diagram of a connection circuit. The above-mentioned output terminal 31 includes a plurality of output parts 42 (six output parts as for the illustrated embodiment) each composed of a pair of output terminals 42a, 42b. Then, the control section 28 controls the output of power by switching whether AC voltage output from the pair of output terminals 42a, 42b of each of the above output parts 42 is performed or not.

The connection circuit 41 includes a plurality of first distributors (first distributing devices, distribution terminals) 43 each constituted such that an input side thereof is connected to the corresponding output part 42 of the output terminal 31 so as to distribute the AC power outputted from the output terminal 31 and a second distributor (a second distributing device, a distribution terminal) 44 connected to an output side of the first distributor 43 to further distribute the distributed power obtained by the first distributor 43.

The first distributor 43 includes a plurality of input parts (ten input parts as for the illustrated embodiment) 46 each composed of a pair of input ports 46a, 46b and a plurality of output parts (ten output parts as for the illustrated embodiment) 47 each composed of a pair of output ports 47a, 47b. The input parts 46 and the output parts 47 both of which are provided by the same number are individually connected to each other via fixed wiring (wiring) 48 in a one-to-one correspondence manner. Specifically, the mutually nearby ones of the input ports 46a, 46b of each input part 46 and the output ports 47a, 47b of each output part 47 are respectively electrically connected to each other via the fixed wiring 48.

One output part 47 and another output part 47 in the same first distributor 43 are connected to each other by respectively connecting the output ports 47a, 47a of one side to each other and the output ports 47b, 47b of the other side to each other via switching wiring (wiring) 49. Thus, a power output pattern in the first distributor 43 can be switched by changing a pattern of combination of the output parts 47, 47 connected to each other via the switching wiring 49. In other words, the first distributor 43 is constituted so as to be capable of changing a wiring structure, and therefore, can change the power output pattern in accordance with a change of the wiring structure.

As for the illustrated embodiment, power outputted from three output parts 41 of the output terminal 31 is individually outputted to three input parts 46 of the first distributor 43 in a one-to-one correspondence relationship. By the way, the output terminal 31 includes six output parts 42 as for the illustrated embodiment, so that power comes to be supplied from one output terminal 31 to two first distributors 43 in total.

Then, one input part 46 is connected to one corresponding output part 47 via the fixed wiring 48, and this output part 47 is connected (branched into) to at most two other output parts 47, 47. To the thus branched output parts 47, 47 are respectively electrically connected the second distributors 44.

Namely, the first distributor 43 distributes and outputs the input power from one location to at most two locations. By the way, one input part 46 connected to the output terminal 31 is connected to the output part 47 via the fixed wiring 48, and this output part 47 is directly corrected to the second distributor 44 without being connected to other output parts 47. With the above wiring structure, the illustrated first distributor 43 individually gains the input power from three locations, in which case, the input power from three locations is distributed to five locations in total, and consequently, the power distributed to five locations is outputted to each second distributor 44.

The second distributor 44 includes a plurality of input parts 51 (five input parts as for the illustrated embodiment) each composed of a pair of input ports 51a, 51b and a plurality of output parts 52 (five output parts as for the illustrated embodiment) each composed of a pair of output ports 52a, 52b. The input parts 51 and the output parts 52 both of which are provided by the same number are individually connected to each other via fixed wiring (wiring) 53 in a one-to-one correspondence manner. By the way, the mutually nearby ones of the input ports 51a. 51b of each input part 51 and the output ports 52a, 52b of each output part 52 are respectively electrically connected to each other via the fixed wiring 53.

One output part 52 and another output part 52 in the same second distributor 44 are electrically connected to each other by respectively connecting the output ports 52a, 52a of one side to each other and the output ports 52b, 52b of the other side to each other via switching wiring (wiring) 54. A pattern of combination of the output parts 52, 52 connected to each other via the switching wiring 54 is changed, and therefore, a power output pattern in the second distributor 44 can be switched in accordance with a change of the pattern of combination. In other words, the second distributor 44 is also constituted so as to be capable of changing a wiring structure like the first distributor 43, and therefore, can change the power output pattern in accordance with a change of the wiring structure.

As for a non-claimed embodiment, power outputted to one location from the first distributor 43 is inputted to one input part 51 of the second distributor 44. Then, this input part 51 is connected to one corresponding output part 52 via the fixed wiring 53, and this output part 52 is connected (branched into) to two other output parts 52, 52. To the thus branched two output parts 52, 52 are individually electrically connected the feeding devices 11.

With the above wiring structure, the illustrated second distributor 44 distributes the input power from one location to two locations, and consequently, the power distributed to two locations is individually outputted to the corresponding feeding devices 11.

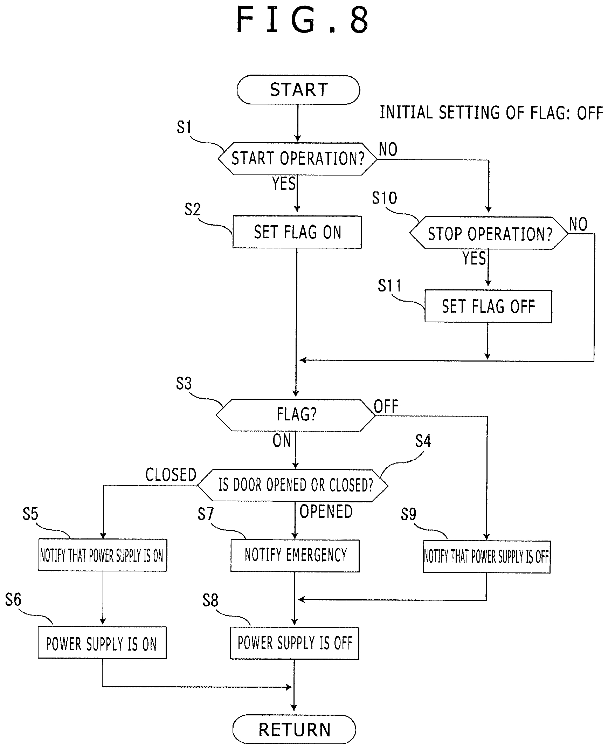

FIG. 8 is a flowchart showing the processing procedure of a control section. When powered ON, the control section 28 starts processing with a step S1. In the step S1, it is confirmed whether the start operation with the operation start button 34a is performed or not, and when confirmed that the start operation is performed, advance to a step S2 is made. In the step S2, a flag constituted such that an ON state thereof indicates a state in which power supply (electric field formation) starting processing has been already executed is set ON, and thereafter, advance to a step S3 is made. By the way, the flag is set OFF in an initial state.

In the step S3, it is confirmed whether the flag is ON or OFF, and when confirmed that the flag is in an ON state, advance to a step S4 is made. In the step S4, it is confirmed by the opening/closing detection means 29 whether the entrance is opened or closed, and when confirmed that the entrance is in a closed state, it is determined that the electric field formation can be started with safety, and thereafter, advance to a step S5 is made.

In the step S5, notification processing is executed to notify that the electric field formation has been started, and thereafter, advance to a step S6 is made. By the way, notification of that effect (notification of the power supply state) is given by the manner in which information of that effect (character information indicating "In generating high potential voltage", for instance) is displayed on the operating condition display part 34e, while the dedicated notification light 33 used only for notifying the power supply state is lighted on, and further in which a guidance of that effect ("Start operation", for instance) by voice is given when the voice guidance is ON, in addition to the manner in which, with the operation start button 34a displayed in conspicuous notification color (red color, for instance), the operation stop button 34b is displayed in inconspicuous non-notification color (gray color, for instance).

In the step S6, power is supplied to the feeding devices 11 to perform the electric field formation to the disposition space 16, and thereafter, return to the step S1 is made. By the way, on this occasion, power may be also outputted from the plurality of output parts 42, or alternatively, only from the appropriately selected one or plurality of output parts 42.

When detected in the Step S4 that the entrance 1a is in an opened state, advance to a step S7 is made. In the step S7, it is determined that, because of the fact that the entrance 1a is kept opened although the electric field formation is instructed, it is dangerous to start the electric field formation in this state or to maintain a state in which the electric field is formed, so that notification processing is executed to notify that effect, and thereafter, advance to a step S8 is made.

By the way, notification of that effect (notification of a power supply emergency stop state) is given by the manner in which information of that effect (character information indicating "Door is open", for instance) is displayed on the opening/closing information display part 34d, and another information of that effect (character information indicating "In stopping high potential voltage", for instance") is displayed on the operating condition display part 34e, while the notification light 33 is lighted off (the notification processing is brought to an end), and further in which a guidance of that effect by voice (in which a voice message of "Door is open" and that of "Stop operation" are repeated by turns, for instance) is given when the voice guidance is ON, in addition to the manner in which, with the operation start button 34a displayed in conspicuous notification color (red color, for instance), the operation stop button 34b is displayed in different conspicuous notification color (green color, for instance).

In the step S8, the supply of power to all the feeding devices 11 is stopped to bring the electric field formation to each disposition space 16 to a stop, and thereafter, return to the step S1 is made.

When confirmed in the step S3 that the flag is in an OFF state, it is determined that the electric field formation is required to be brought to a stop, and thereafter, advance to a step S9 is made.

In the step S9, notification processing is executed to notify that the electric field formation is brought to a stop, and thereafter, advance to the step S8 is made. By the way, notification of that effect (notification of the power stop state) is given by the manner in which information of that effect (character information indicating "In stopping high potential voltage", for instance) is displayed on the operating condition display part 34e, while the notification light 33 is lighted off (the notification processing is brought to an end), and further in which a guidance of that effect ("Stop operation", for instance) by voice is given when the voice guidance is ON, in addition to the manner in which, with the operation start button 34a displayed in inconspicuous non-notification color (gray color, for instance), the operation stop button 34b is displayed in conspicuous notification color (green color, for instance).

When confirmed in the step S1 that no start operation with the operation start button 34a is performed, advance to a step S10 is made. In the step S10, it is detected whether the stop operation with the operation stop button 34b is performed or not, and when detected that the stop operation is performed, advance to a step S11 is made, and otherwise, advance to the step S3 is made.

In the step S11, the flag is set OFF in order to respond to an instruction for the above stop operation, and thereafter, advance to the step S3 is made.

The food storage chamber having the above constitution is capable of refrigerating and/or defrosting and storing the food, and besides, ensures high safety because whether or not to form the electric field that provides enhanced cooling and defrosting efficiencies (whether or not to perform the operation) is determined in linkage with whether the entrance 1a is opened or closed. This food storage chamber also has high convenience because the information displayed on the liquid crystal display 34 is managed unitarily. Further, this food storage chamber is also adaptable to addition and/or removal of the storage shelf 7 and thus offers high versatility because the wiring structure of the connection circuit 41 is capable of being appropriately changed.

Moreover, the notification of the power supply emergency stop state is given in such a manner as to be distinguished from the notification of the mere power supply stop state, and therefore, an abnormal condition can be immediately noticed. In addition, the notification of the power supply state is given also by the notification light 33 that forms the dedicated notification means used only for notifying the power supply state, and therefore, the power supply state can be immediately noticed as well.

It is noted that the control section 28 individually makes switching as to whether AC power output is performed or not, every plurality of output parts 42 of the output terminal 31, in which case, however, such switching may be also made by executing the same processing in a batch on all the output parts 42 of the output terminal 31. For instance, the control section 28 executes power output stopping and/or starting processing in a batch on all the output parts 42 of the output terminal 31.

### Explanation of Reference Numerals:

1a: Entrance
2: Storage chamber interior
3. Cooling device
4: Voltage application device
6: Power supplying device
8: Ground electrode plate (Electrode, Ground electrode)
9: Application electrode plate (Electrode, Application electrode)
11: Feeding device (Voltage applying means)
16: Disposition space (Space)
29: Opening/closing detection means
28: Control section
31: Output terminal (Power output means)
32: Voice output means (Notification means, Speaker)
34a: Operation start button (Start operation means, Notification means)
34b: Operation stop button (Stop operation means, Notification means)
34c: Voice button (Switching operation means)
34d: Opening/closing information display part (Notification means)
34e: Operating condition display part (Notification means) 37: Casing
41: Connection circuit
43: First distributor (First distributing device, Distribution terminal)
44: Second distributor (Second distributing device, Distribution terminal)

## Claims

1. A food defrosting/refrigerating storage chamber that is for defrosting or refrigerating and storing food in a space in which an electric field is formed by means of application of an AC voltage, and that comprises:
a cooling device (3) for cooling a storage chamber interior (2);
a plurality of voltage application devices (4);
a power supplying device (6) for supplying power; and
a connection circuit (41) for electrically connecting the power supplying device (6) and said plurality of voltage application devices (4) to each other;
wherein said voltage application devices (4) each have a pair of electrodes (8, 9) disposed in the storage chamber interior (2) and a voltage applying means (11) for applying an AC voltage between the pair of electrodes (8, 9);
wherein a space (16) in which food is to be disposed is formed between said pair of electrodes (8, 9);
wherein said connection circuit (41) includes a first distributing device (43) for distributing the supplied power from said power supplying device (6) to a plurality of locations;
wherein said power supplying device (6) includes a control section (28) for controlling supply of power and an output terminal (31) connected to an output side of the control section (28) to output power to the first distributing device (43); and
wherein said control section (28) is constituted so as to control the supply of power to the voltage applying means (11) via said output terminal (31);
**characterised in that**
said connection circuit (41) further comprises a second distributing device (44) for further distributing the distributed power obtained by the first distributing device (43) to a plurality of locations, the distributed power being supplied to said voltage applying means (11); and
said power supplying device (6) has a casing (37) in which said control section (28) and said output terminal (31) are arranged inside in a unitized form.

2. The food defrosting/refrigerating storage chamber according to claim 1, wherein said first distributing device (43) or said second distributing device (44) is constituted so as to have a power distribution configuration that can be changed by changing a wiring structure.

3. The food defrosting/refrigerating storage chamber according to any one of claims 1 and 2, wherein said power output means (31) is constituted so as to be capable of outputting power to a plurality of first distributing devices (43) .

4. The food defrosting/refrigerating storage chamber according to any one of claims 1 to 3, wherein said power supplying device (6) includes a start operation means (34a) for starting the supply of power via said control section (28), a stop operation means (34b) for stopping the supply of power via said control section (28) and a notification means (33), and wherein said control section (28) gives notification by said notification means (33) to notify a power supply state in which power is supplied based on an operation by said start operation means (34a), in the case of the presence of said power supply state, while giving notification by said notification means (33) to notify a power supply stop state in which the supply of power is stopped based on an operation by said stop operation means (34b), in the case of the presence of said power supply stop state.

5. The food defrosting/refrigerating storage chamber according to claim 4, wherein said power supplying device (6) includes an opening/closing detection means (29) for detecting whether an entrance (1a) to the storage chamber interior (2) is opened or closed, and wherein said control section (28) stops the supply of power in the case where said opening/closing detection means (29) detects that the entrance (1a) is in an opened state at the time of the presence of said power supply state, and gives notification by said notification means (33) to notify a power supply emergency stop state in such a manner as to be distinguished from said power supply stop state.

6. The food defrosting/refrigerating storage chamber according to any one of claims 4 and 5, wherein said power supplying device (6) includes a voice output means (32) included as one of said notification means (33) and a switching operation means (34c) for switching whether the notification by said voice output means (32) is given or not.

7. The food defrosting/refrigerating storage chamber according to any one of claims 4 to 6, wherein said power supplying device (6) includes a dedicated notification means (33) used only for notifying the power supply state.

## Patentansprüche

1. Lebensmittel-Auftau-/Kühl-Lagerkammer zum Auftauen oder Kühlen und Lagern von Lebensmitteln in einem Raum, in dem durch Anlegen einer Wechselspannung ein elektrisches Feld erzeugt wird, wobei die Lebensmittel-Auftau-/Kühl-Lagerkammer aufweist:
eine Kühlvorrichtung (3) zum Kühlen eines Lagerkammerinnenraums (2);
eine Mehrzahl von Spannungsanlegungsvorrichtungen (4);
eine Stromversorgungseinrichtung (6) zum Bereitstellen von Strom; und
eine Verbindungsschaltung (41) zum elektrischen Verbinden der Stromversorgungseinrichtung (6) und der Mehrzahl von Spannungsanlegungsvorrichtungen (4) miteinander,
wobei die Spannungsanlegungsvorrichtungen (4) jeweils ein Paar Elektroden (8, 9), die im Lagerkammerinnenraum (2) angeordnet sind, und eine Spannungsanlegungseinrichtung (11) zum Anlegen einer Wechselspannung zwischen dem Paar Elektroden (8, 9) aufweisen,
wobei zwischen dem Paar Elektroden (8, 9) ein Raum (16) gebildet wird, in dem Lebensmittel angeordnet werden sollen,
wobei die Verbindungsschaltung (41) eine erste Verteilungseinrichtung (43) zum Verteilen des bereitgestellten Stroms von der Stromversorgungseinrichtung (6) an eine Mehrzahl von Stellen aufweist,
wobei die Stromversorgungseinrichtung (6) einen Steuerabschnitt (28) zum Steuern der Strombereitstellung und einen Stromausgangsanschluss (31), der mit einer Ausgangsseite des Steuerabschnitts (28) verbunden ist, um Strom an die erste Verteilungseinrichtung (43) auszugeben, aufweist, und
wobei der Steuerabschnitt (28) dazu eingerichtet ist, die Strombereitstellung an die Spannungsanlegungseinrichtung (11) über den Stromausgangsanschluss (31) zu steuern,
**dadurch gekennzeichnet, dass**
die Verbindungsschaltung (41) ferner eine zweite Verteilungseinrichtung (44) zum weiteren Verteilen des durch die erste Verteilungseinrichtung (43) erhaltenen Stroms an eine Mehrzahl von Stellen aufweist, wobei der verteilte Strom an die Spannungsanlegungseinrichtung (11) bereitgestellt wird; und
die Stromversorgungseinrichtung (6) ein Gehäuse (37) aufweist, in dem der Steuerabschnitt (28) und der Stromausgangsanschluss (31) in einer vereinheitlichten Form angeordnet sind.

2. Lebensmittel-Auftau-/Kühl-Lagerkammer nach Anspruch 1, wobei die erste Verteilungseinrichtung (43) oder die zweite Verteilungseinrichtung (44) dazu eingerichtet ist, eine Stromverteilungskonfiguration aufzuweisen, die durch Ändern einer Verdrahtungsstruktur veränderbar ist.

3. Lebensmittel-Auftau-/Kühl-Lagerkammer nach Anspruch 1 oder 2, wobei der Stromausgangsanschluss (31) dazu eingerichtet ist, Strom an eine Mehrzahl von ersten Verteilungseinrichtungen (43) auszugeben.

4. Lebensmittel-Auftau-/Kühl-Lagerkammer nach einem der Ansprüche 1 bis 3, wobei die Stromversorgungseinrichtung (6) eine Start-Betätigungseinrichtung (34a) zum Starten der Strombereitstellung über den Steuerabschnitt (28), eine Stopp-Betätigungseinrichtung (34b) zum Stoppen der Strombereitstellung über den Steuerabschnitt (28) und eine Meldeeinrichtung (33) aufweist, und wobei der Steuerabschnitt (28) über die Meldeeinrichtung (33) eine Meldung ausgibt, um einen Stromversorgungszustand zu melden, in dem Strom basierend auf einer Betätigung der Start-Betätigungseinrichtung (34a) bereitgestellt wird, wenn der Stromversorgungszustand vorliegt, während er über die Meldeeinrichtung (33) eine Meldung ausgibt, um einen Stromversorgungs-Stoppzustand zu melden, in dem die Strombereitstellung basierend auf einer Betätigung der Stopp-Betätigungseinrichtung (34b) gestoppt wird, wenn der Stromversorgungs-Stoppzustand vorliegt.

5. Lebensmittel-Auftau-/Kühl-Lagerkammer nach Anspruch 4, wobei die Stromversorgungseinrichtung (6) eine Öffnungs-/Schließ-Erfassungseinrichtung (29) zum Erfassen, ob ein Eingang (1a) zum Lagerkammerinnenraum (2) geöffnet oder geschlossen ist, aufweist, und wobei der Steuerabschnitt (28) die Strombereitstellung in dem Fall stoppt, in dem die Öffnungs-/Schließ-Erfassungseinrichtung (29) erfasst, dass sich der Eingang (1a) während des Vorliegens des Stromversorgungszustands in einem geöffneten Zustand befindet, und über die Meldeeinrichtung (33) eine Meldung ausgibt, um einen Stromversorgungs-Notabschaltungszustand derart zu melden, dass er von dem Stromversorgungs-Stoppzustand unterscheidbar ist.

6. Lebensmittel-Auftau-/Kühl-Lagerkammer nach Anspruch 4 oder 5, wobei die Stromversorgungseinrichtung (6) neben der Meldeeinrichtung (33) auch eine Sprachausgabeeinrichtung (32) und eine Schaltbetätigungseinrichtung (34c) zum Schalten, ob die Meldung durch die Sprachausgabeeinrichtung (32) ausgegeben wird oder nicht, aufweist.

7. Lebensmittel-Auftau-/Kühl-Lagerkammer nach einem der Ansprüche 4 bis 6, wobei die Stromversorgungseinrichtung (6) eine dedizierte Meldeeinrichtung (33) aufweist, die nur zum Melden des Stromversorgungszustands verwendet wird.

## Revendications

1. Chambre de stockage de dégivrage/réfrigération d'aliments qui est destinée à dégivrer ou réfrigérer et stocker des aliments dans un espace dans lequel un champ électrique est formé au moyen de l'application d'une tension alternative, et qui comprend :
un dispositif de refroidissement (3) pour refroidir un intérieur de chambre de stockage (2) ;
une pluralité de dispositifs d'application de tension (4) ;
un dispositif d'alimentation électrique (6) pour fournir une puissance électrique ; et
un circuit de connexion (41) pour connecter électriquement le dispositif d'alimentation électrique (6) et ladite pluralité de dispositifs d'application de tension (4) les uns aux autres ;
dans laquelle lesdits dispositifs d'application de tension (4) ont chacun une paire d'électrodes (8, 9) disposées dans l'intérieur de chambre de stockage (2) et un moyen d'application de tension (11) pour appliquer une tension alternative entre la paire d'électrodes (8, 9) ;
dans laquelle un espace (16) dans lequel doivent être disposés les aliments est formé entre ladite paire d'électrodes (8, 9) ;
dans laquelle ledit circuit de connexion (41) comporte un premier dispositif de répartition (43) pour répartir la puissance électrique fournie par le dispositif d'alimentation électrique (6) sur une pluralité d'emplacements ;
dans laquelle ledit dispositif d'alimentation électrique (6) comporte une section de commande (28) pour commander l'alimentation en puissance électrique et une borne de sortie (31) connectée à un côté de sortie de la section de commande (28) pour délivrer une puissance électrique au premier dispositif de répartition (43) ; et
dans laquelle ladite section de commande (28) est constituée de manière à commander l'alimentation du moyen d'application de tension (11) en puissance électrique via ladite borne de sortie (31) ;
**caractérisée en ce que**
ledit circuit de connexion (41) comprend en outre un deuxième dispositif de répartition (44) pour répartir en outre la puissance électrique répartie obtenue par le premier dispositif de répartition (43) sur une pluralité d'emplacements, la puissance électrique répartie étant fournie audit moyen d'application de tension (11) ; et
ledit dispositif d'alimentation électrique (6) a un boîtier (37) à l'intérieur duquel ladite section de commande (28) et ladite borne de sortie (31) sont agencées sous une forme unitaire.

2. Chambre de stockage de dégivrage/réfrigération d'aliments selon la revendication 1, dans laquelle ledit premier dispositif de répartition (43) ou ledit deuxième dispositif de répartition (44) est constitué de manière à avoir une configuration de répartition de puissance électrique qui peut être changée en changeant une structure de câblage.

3. Chambre de stockage de dégivrage/réfrigération d'aliments selon l'une quelconque des revendications 1 et 2, dans laquelle ledit moyen de sortie de puissance électrique (31) est constitué de manière à pouvoir délivrer une puissance électrique à une pluralité de premiers dispositifs de répartition (43).

4. Chambre de stockage de dégivrage/réfrigération d'aliments selon l'une quelconque des revendications 1 à 3, dans laquelle ledit dispositif d'alimentation électrique (6) comporte un moyen d'opération de démarrage (34a) pour démarrer l'alimentation en puissance électrique via ladite section de commande (28), un moyen d'opération d'arrêt (34b) pour arrêter l'alimentation en puissance électrique via ladite section de commande (28) et un moyen de notification (33), et dans laquelle ladite section de commande (28) donne une notification par ledit moyen de notification (33) pour notifier un état d'alimentation en puissance électrique dans lequel une puissance électrique est fournie sur la base d'une opération par ledit moyen d'opération de démarrage (34a), dans le cas de la présence dudit état d'alimentation en puissance électrique, tout en donnant une notification par ledit moyen de notification (33) pour notifier un état d'arrêt d'alimentation en puissance électrique dans lequel l'alimentation en puissance électrique est arrêtée sur la base d'une opération par ledit moyen d'opération d'arrêt (34b), dans le cas de la présence dudit état d'arrêt d'alimentation en puissance électrique.

5. Chambre de stockage de dégivrage/réfrigération d'aliments selon la revendication 4, dans laquelle ledit dispositif d'alimentation électrique (6) comporte un moyen de détection d'ouverture/fermeture (29) pour détecter si une entrée (1a) vers l'intérieur de chambre de stockage (2) est ouverte ou fermée, et dans laquelle ladite section de commande (28) arrête l'alimentation en puissance électrique dans le cas où ledit moyen de détection d'ouverture/fermeture (29) détecte que l'entrée (1a) est dans un état ouvert au moment de la présence dudit état d'alimentation en puissance électrique, et donne une notification par ledit moyen de notification (33) pour notifier un état d'arrêt d'urgence d'alimentation en puissance électrique de manière à le distinguer dudit état d'arrêt d'alimentation en puissance électrique.

6. Chambre de stockage de dégivrage/réfrigération d'aliments selon l'une quelconque des revendications 4 et 5, dans laquelle ledit dispositif d'alimentation électrique (6) comporte un moyen de sortie vocale (32) inclus comme l'un parmi ledit moyen de notification (33) et un moyen d'opération de commutation (34c) pour commuter selon que la notification par ledit moyen de sortie vocale (32) est donnée ou non.

7. Chambre de stockage de dégivrage/réfrigération d'aliments selon l'une quelconque des revendications 4 à 6, dans laquelle ledit dispositif d'alimentation électrique (6) comporte un moyen de notification (33) dédié utilisé uniquement pour notifier l'état d'alimentation en puissance électrique.
